# EUROPÄISCHE PATENTSCHRIFT

(11) **EP 3 788 314 B1**
(45) Veröffentlichungstag und Bekanntmachung des Hinweises auf die Patenterteilung: **04.05.2022**
(21) Anmeldenummer: 19720832.5
(22) Anmeldetag: 26.04.2019
(51) Int. Cl.: F27B 7/36, F27B 7/38, C04B 7/36, C04B 7/44

(54) **OXYFUEL-KLINKERHERSTELLUNG MIT SPEZIELLER SAUERSTOFFZUGASUNG**
OXYFUEL CLINKER PRODUCTION WITH SPECIAL OXYGEN ADDITION
FABRICATION DE CLINKER PAR OXYCOMBUSTION AVEC APPORT D'OXYGÈNE SPÉCIAL

(30) Priorität: 30.04.2018 DE 102018206673
(43) Veröffentlichungstag der Anmeldung: 10.03.2021
(73) Patentinhaber: thyssenkrupp Industrial Solutions AG, 45143 Essen (DE)
(72) Erfinder: LEMKE, Jost, 59320 Ennigerloh (DE); WILLMS, Eike, 44309 Dortmund (DE)
(74) Vertreter: thyssenkrupp Intellectual Property GmbH
(86) Internationale Anmeldenummer: PCT/EP2019/060773
(87) Internationale Veröffentlichungsnummer: WO 2019/211202

(56) Entgegenhaltungen:
- WO-A1-99/06778
- US-A- 3 162 431

## Beschreibung

Die vorliegende Erfindung betrifft ein Verfahren zur Herstellung von Zementklinker wobei ein sauerstoffhaltiges Gas, das einen Anteil von 15 Vol. % oder weniger Stickstoff und einen Anteil von 50 Vol. % oder mehr Sauerstoff aufweist, aus einer ersten, direkt an den Ofenkopf angrenzenden Sektion des Kühlers in den Drehofen und gegebenenfalls zusätzlich den Calcinator geführt wird.

Aus dem Stand der Technik sind Verfahren und Anlagen bekannt, bei dem Luft im Klinkerkühler eingeleitet und vorgewärmt wird, wobei ein Teil dieser Luft in den Ofen fließen kann. Weiterhin ist es bekannt, dem Kühler anstelle von Luft Mischungen aus CO₂ und O₂ aufzugeben.

Beispiele für Stand der Technik sind EP 1 037 005 B1, JP 2007-126328 A oder DE 100 13 929 C2. Weitere Beispiele sind die WO 99/06778 A1 und die US 3 162 431 A.

Aufgrund stetig steigender Anforderungen an die Ökonomie und Ökologie besteht nach wie vor ein Bedarf an verbesserten Anlagen und Verfahren für die Herstellung von Zementklinker.

Aufgabe der vorliegenden Erfindung war es demgemäß unter anderem ein verbessertes Verfahren für die Herstellung von Zementklinker zur Verfügung zu stellen, welche die Nachteile des Standes der Technik nicht aufweisen, bzw. gegenüber den Anlagen und Verfahren des Standes der Technik im Hinblick auf Ökonomie und Ökologie verbessert sind.

Gelöst wird die Aufgabe im Rahmen der vorliegenden Erfindung durch die Gegenstände der anhängenden Ansprüche, wobei die Unteransprüche bevorzugte Ausgestaltungen darstellen.

Weitere erfindungsgemäße Ausgestaltungen ergeben sich aus der nachfolgenden Beschreibung.

Die vorliegende Erfindung betrifft in einer Ausführungsform ein Verfahren zur Durchführung in einer Drehofenanlage zur Herstellung von Zementklinker, die eine Vorrichtung konfiguriert zur Zuführung von sauerstoffhaltigem Gas, das einen Anteil von 15 Vol. % oder weniger Stickstoff und einen Anteil von 50 Vol. % oder mehr Sauerstoff aufweist, aus einer ersten, direkt an den Ofenkopf angrenzenden Sektion des Kühlers in den Drehofen und gegebenenfalls zusätzlich den Calcinator, aufweist und wobei die Anlage konfiguriert ist, um den Verbrennungsprozessen Gasströme zuzuführen, die in Summe zu mehr als 50 Vol.-%, vorzugsweise zu mehr als 85 Vol.-%, aus Sauerstoff bestehen.

In einer weiteren Ausführungsform betrifft die vorliegende Erfindung entsprechend ein Verfahren zur Herstellung von Zementklinker, wobei ein sauerstoffhaltiges Gas, das einen Anteil von 15 Vol. % oder weniger Stickstoff und einen Anteil von 50 Vol. % oder mehr Sauerstoff aufweist, aus einer ersten, direkt an den Ofenkopf angrenzenden Sektion des Kühlers in den Drehofen und gegebenenfalls zusätzlich den Calcinator geführt wird, wobei die den Verbrennungsprozessen zugeführten Gasströme in Summe zu mehr als 50 Vol.-%, vorzugsweise zu mehr als 85 Vol.-%, aus Sauerstoff bestehen.

Das erfindungsgemäße Verfahren kann also mit einer Form von Oxyfuel-Verfahren verglichen werden.

Gegenüber bisher bekannten Konzepten grenzt sich das Verfahren der vorliegenden Erfindung unter anderem auch dadurch ab, dass als Sekundärgas am Ofenkopf keine übliche O₂/CO₂-Mischung aufgegeben, sondern ein möglichst reines Sauerstoffgas eingesetzt wird. Dies wurde bisher aufgrund von erwarteten Problemen aufgrund höherer Verbrennungstemperaturen im Drehrohrofen und verringerter Gasvolumenströme (also geringerer Tragfähigkeit des oder der Gase für Feststoff im Calcinator und Vorwärmerbereich) nicht näher betrachtet. Durch mehrere gezielte Anpassungen des Prozesses können diese Probleme aber überwunden werden und führen in der Konsequenz zu einer deutlich reduzierten Bauhöhe und einem verringerten Platzbedarf der Anlage bei gleichzeitig höherer CO₂-Konzentration im Abgas.

In bevorzugten Ausführungsformen der vorliegenden Erfindung besteht die Drehofenanlage aus einem Zyklonvorwärmer, einem In-line-Calcinator ohne Tertiärluftleitung, einem Drehofen und einem Kühler. Vom Kühler verläuft eine Leitung für Mittenluft zu einer mittleren Zyklonstufe im Vorwärmer und anschließend zur Rohmühle.

In bevorzugten Ausführungsformen der vorliegenden Erfindung besteht der Zyklonvorwärmer aus einer mehrstufigen Zyklonkaskade, die mit einer deutlich geringeren Gasmenge betrieben wird. Der Abgasvolumenstrom nach Vorwärmer liegt bei etwa 0,50 bis 0,70 Nm³/kg Klinker. Das Verhältnis Aufgabemenge zu Abgas ist dementsprechend höher möglich als bisher und beträgt in einer Variante 1 bis 2 kg/kg Feststoff zu Gas, bevorzugt 1,3 bis 1,9 kg/kg Feststoff zu Gas. Parallel zur Zyklonkaskade ist eine zusätzliche Zyklonstufe vorgesehen, die mit heißer Luft aus dem Kühler beschickt wird. Bezogen auf den Mehlfluss befindet sich diese zusätzliche Stufe in einer bevorzugten Ausgestaltung mittig innerhalb der Zyklonkaskade.

Falls die Kühlerabluft für zur Mehlvorwärmung alternative Zwecke genutzt werden soll, ist es auch möglich, dass die Vorwärmung nur durch Abgase aus dem Calcinator erfolgt.

In weiteren Ausführungsformen der vorliegenden Erfindung kann der Vorwärmer als Wirbelschichtreaktor ausgestaltet sein, insbesondere in Form einer so genannten blasenbildenden Wirbelschicht.

Entsprechend wird in einigen Ausführungsformen der vorliegenden Erfindung im Vorwärmschritt das Verhältnis von zugeführtem Feststoff zu Abgas auf größer als 1,0 kg, vorzugsweise größer als 1,3 kg Feststoff je 1 kg Gas, bevorzugt 1 bis 2 kg/kg Feststoff zu Gas, besonders bevorzugt 1,3 bis 1,9 kg/kg Feststoff zu Gas, eingestellt, bzw. die Anlage ist entsprechend konfiguriert, im Vorwärmer ein solches Verhältnis einzustellen (Aufgabemenge zu Abgasstrom).

Der Calcinator entspricht im Wesentlichen dem klassischen Design, wobei das Feststoff-Gas-Verhältnis deutlich höher ist, es treten lokal Feststoffbeladungen von mehr als 2 kg je kg Gas auf, beispielsweise 2 bis 8 kg je kg Gas. Im Calcinator wird der größte Teil (mehr als 60%, beispielsweise ca. 80 % der Brennstoffwärme umgesetzt. Durch das vorhandene Mehl ist trotz anfänglicher Sauerstoffkonzentration von etwa 75 % eine ausreichende Wärmesenke gegeben, die eine Überhitzung verhindert. Falls grobstückiger Ersatzbrennstoff (mit Kantenlängen von >100 mm verbrannt werden soll, ist ggf. ein geneigter Bereich mit höherer Verweildauer für den Brennstoff vorzusehen. Beispiele für solche geneigten Bereiche sind Treppenstufen, Vorschubroste, Rückschubroste etc.

Entsprechend wird in einigen Ausführungsformen der vorliegenden Erfindung im Calcinierschritt das Verhältnis von zugeführtem Feststoff zu Abgas auf größer als 1,0 kg, vorzugsweise größer als 1,3 kg Feststoff je 1 kg Gas, bevorzugt 1 bis 2 kg/kg Feststoff zu Gas, besonders bevorzugt 1,3 bis 1,9 kg/kg Feststoff zu Gas, eingestellt, bzw. die Anlage ist entsprechend konfiguriert, im Calcinator ein solches Verhältnis einzustellen.

Da die Anlage im Rahmen der vorliegenden Erfindung bevorzugt ohne "Tertiärluft" bzw. "Tertiärgas" (d.h. einem Gasstrom, der dem Ofen im Bypass geschaltet und an den Calcinator angeschlossen ist) betrieben wird, kann beispielsweise eine separate, mit "Tertiärluft" bzw. "Tertiärgas" beaufschlagte Brennkammer nicht in gewohnter Bauweise eingesetzt werden.

Mögliche Alternativen sind im Rahmen der vorliegenden Erfindung bevorzugt eine Überströmung des Brennstoffes in dem geneigten Bereich des Calcinators mit dem Ofenabgas als in den Calcinator integrierte Variante oder eine verkürzte Ausführung, die an den einen Calcinator ohne geneigte Flächen angesetzt ist.

Der Drehofen wird im Rahmen der vorliegenden Erfindung mit heißem Gas aus der vordersten Sektion des Kühlers angeströmt. Dabei handelt es sich um ein sauerstoffhaltiges Gas, das einen Anteil von 15 Vol. % oder weniger Stickstoff und einen Anteil von 50 Vol. % oder mehr Sauerstoff aufweist.

In einer Variante der vorliegenden Erfindung handelt es sich dabei um möglichst reinen Sauerstoff (mehr als 90 %).

Der Drehofenbrenner führt den Brennstoff in die Sinterzone, wofür als Transportgas für den Brennstoff rezirkuliertes CO₂ oder eine Mischung aus CO₂ und Sauerstoff verwendet wird.

Die Brennstoffmenge wird im Rahmen der vorliegenden Erfindung so gewählt, dass die erforderliche Sinterzonenbeschaffenheit erreicht wird. Für die Herstellung von Zementklinker wird durch die Verbrennung ein heißer, erster Bereich des Ofens von etwa 1/3 der Gesamtofenlänge zur Verfügung gestellt, dessen Funktion die Bildung von C₃S (Tricalciumsilikat bzw. Alit) ist und an dessen heißester Stelle Materialtemperaturen von mehr als 1450°C erreicht werden. Um eine hinreichende Ausdehnung des heißen Bereiches auf das etwa erste Drittel des Ofens zu gewährleisten, ist in manchen Ausführungsformen der Einsatz gröberer Brennstoffe im Vergleich zum Stand der Technik denkbar, da in der heißen Sauerstoffatmosphäre ein sehr schneller Ausbrand erfolgt. Gleichzeitig oder alternativ ist es denkbar die Primärgasmenge und / oder gebläseseitige Pressung zu reduzieren, die bei Drehofenbrennern üblicherweise notwendig ist, um die Flamme zu formen. Beides resultiert in Einsparungen im elektrischen Energieverbrauch und kleineren Strömungsmaschinen zur Druckerhöhung und Beschleunigung des Primärgases. Die in der Sinterzone umgesetzte Brennstoffmenge liegt bei 20 % oder mehr der gesamten Brennstoffwärme. Da dem Drehofen die gesamte Sauerstoffmenge zugeführt wird, die für den Verbrennungsprozess nötig ist, liegt der Sauerstoffüberschuss in der Sinterzone bei ca. λ = 5 (d.h. Überschuss im Hinblick auf die für die Verbrennung notwendige Sauerstoffmenge).

Es ist im Rahmen der vorliegenden Erfindung aber genauso gut möglich, Klinker mit hohen C₃S Gehalten und niedrigen C₂S (Dicalciumsilikat) Gehalten zu erbrennen. Die Klinkermineralogie wird üblicherweise über die Rohmehlmischung eingestellt. Übliche Werte für Zementklinker mit 65 % C₃S, 13 % C₂S etc. sind ein Kalkstandard von 95, TM=2,3 (Tonerdemodul), SM=2,5 (Silicatmodul). Wenn eine höhere Temperatur in der Sinterzone bei gleicher Verweilzeit eingestellt wird, ist es möglich, den Kalkstandard zu erhöhen. In diesem Fall wird bei gleichen Freikalkgehalten im Produkt ein höherer C₃S Gehalt erzielt. C₃S-reiche Klinker erzielen bessere Festigkeitseigenschaften im Zement im Vergleich mit C₃S ärmeren Klinkern. Da die C₂S Komponente schwerer mahlbar ist als die C₃S Komponente, erzeugt der höhere C₃S Gehalt darüber hinaus eine Verringerung des notwendigen elektrischen Energieaufwandes für die Zementmahlung.

Alternativ besteht auch die Möglichkeit, die Verweilzeit des Materials im Ofen zu verringern. Es ist in Varianten möglich, die Öfen in Bezug auf die Verweilzeit zu kürzen, wenn bei höheren Temperaturen Zementklinker mit den oben angegebenen "Standardwerten" produziert werden soll. Eine bevorzugte Ausführung könnte darin bestehen, die Öfen dann schneller zu drehen (z.B. mit mehr als 5 rpm) und / oder eine geringere Ofenneigung einzustellen.

Aufgrund des stark erhöhten Sauerstoffangebotes in der Sinterzone ist mit einem schnellen Ausbrand auch von weniger gut aufbereiteten Brennstoffen zu rechnen. Dabei kann es sich um gröbere, feuchtere oder heizwertärmere Brennstoffe handeln. Wird für das erfindungsgemäße Verfahren beispielsweise ein fester Brennstoff wie Kohle verwendet, muss der Brennstoff weniger fein aufgemahlen werden. Dies spart elektrische Energie, die ansonsten für die Vermahlung des Brennstoffes bereitgestellt werden muss. Der Brennstoff kann aber ebenso weniger gut getrocknet sein. Dies spart thermische Energie, die anderweitig genutzt werden kann. Das erfindungsgemäße Verfahren bzw. die erfindungsgemäße Anlage sind so insbesondere für den Einsatz von Abfallfraktionen, so genannten Ersatzbrennstoffen vorteilhaft.

Die Flamme im Brennofen kann beispielsweise durch die drei folgenden Methoden A), B) und C) oder eine Kombination davon, gekühlt werden. Dies ist insbesondere dann vorteilhaft, falls die für die Verbrennung notwendige Brennstoffmenge bzw. die Verbrennungsbedingungen, insbesondere die stark angereicherte Sauerstoffatmosphäre zu zu hohen Flammentemperaturen führt.
A) Rückführung eines Teils des Ofenabgases nach dem Ofeneinlauf, verbunden mit einer gezielten Abkühlung dieses Gases. Die Abkühlung des Gases erfolgt bevorzugt indirekt mit einem Wärmetauscher, dem eine Entstaubungseinrichtung, wie beispielsweise ein Abscheidezyklon, vorgeschaltet sein kann. Die durch den indirekten Wärmetausch entnommene Wärmemenge kann in ein Konzept zur Abbwärmenutzung eingebunden sein.
B) Rückführung eines Teils des Ofenabgases mittels eines separaten Calcinierungsstranges dem ein Zyklonabscheider nachgeschaltet ist, verbunden mit einer gezielten Abkühlung dieses Gases. Die Abkühlung des Gases erfolgt bevorzugt direkt im separaten Calcinator mit Abscheidezyklon, indem ein Teil nicht entsäuerten Rohmehls dem Gasstrom aufgegeben und dessen Gastemperatur eingestellt werden kann.
C) Aufgabe von Klinkerstaub in die dem Ofen zugeführte heiße Luft. Hiermit wird die Flamme praktisch gestreckt, die heißen Bereiche des Ofens verlagern sich in Richtung der Ofenmitte, auch der Ofeneinlaufbereich wird heißer gefahren. Dies führt insgesamt zu einer Reduzierung des Wärmeanspruchs im Calcinatorbereich.

Der Kühler, bzw. Klinkerkühler, kann verfahrenstechnisch in mindestens drei funktional verschiedene Teile unterteilt werden:
- Einen ersten Teil, dem das sauerstoffhaltige Gas zugeführt wird und in welchem der Sauerstoff vorgewärmt und dem Drehofen zugeführt wird. Dieser Teil hebt sich gegenüber dem konventionellen Zementherstellungsprozess und bekannten Oxyfuel Prozessen dadurch ab, dass gegenüber den konventionellen Zementherstellungsprozessen keine Umgebungsluft eingesetzt wird und gegenüber den bekannten Oxyfuelprozessen keine Vormischung von rezirkuliertem Vorwärmerabgas mit Sauerstoff erfolgt und dadurch dem Ofen eine geringere Gasmenge zugeführt wird. Gleichzeitig wird aber Wärme aus dem heißen Ofenprodukt zurückgewonnen und dem Drehofen zurückgeführt, wobei der Gasstrom aufgrund seiner geringen Menge im Vergleich zu den anderen Prozessen wesentlich heißer sein kann. In einer Variante der vorliegenden Erfindung wird diesem Teil insbesondere eine für die Verbrennung im Ofen und Calcinator hinreichende Menge an Sauerstoff zugeführt.
- Einem zweiten Teil, in welchem eine Trennung zwischen dem heißen, dem Drehofen zugeführten Gasstromes und dem am Ofen vorbeigeführten Gasstrom erfolgt. Die Trennung kann z.B.
   a) mechanisch erfolgen, z.B. über einen Brecher ggf. mit vorgeschalteter Materialsäule oder eine über dem Klinkerbett positionierte Trennwand, welche die Gasräume trennt, oder
   b) einem System bestehend aus zwei oder mehr räumlichen Trennvorrichtungen, wobei auf den entstehenden Zwischenraum ein Zwischengas aufgegeben wird, welches für den Verbrennungsprozess entweder als Inertgas (insbesondere CO₂, Ar, H₂O) oder Verbrennungsgas wirkt (O₂) wirkt, oder eine Mischung aus diesen Gasen.
- Einem dritten Teil, in welchem die Endkühlung des Klinkers mit einem beliebigen Medium erfolgt. Dabei kann es sich konventionell um Luft oder einen intern rezirkulierten Gasstrom handeln, der dem Kühler mit dem Ziel der weiteren Erwärmung zugeführt wird, z.B. zur nachgeschalteten Nutzung in einem System zur Nutzung von Abwärme.

Bei der vorliegenden Erfindung kann durch die geringe, dem Kühler als Verbrennungsluft entnommene Gasmenge, beispielsweise bei Verwendung eines Kreuzstromkühlers, ein erheblicher Wärmeüberschuss entstehen. Der aus dem Bereich austretende Klinker, dessen Wärmeinhalt nicht für die Verbrennung genutzt wird kann Temperaturen von etwa 1000°C aufweisen. Der Wärmeüberschuss kann durch die Abkühlung des Klinkers von etwa 1000°C auf etwa 100°C erzeugt werden. Diese Wärme kann einerseits verwendet werden, um eine im Vorwärmer zwischengeschaltete Vorwärmstufe mit Wärme zu versorgen und die verbliebene Wärme der Rohmühle zuzuführen. Alternativ kann diese Wärme, zumindest teilweise, für die Verstromung eingesetzt werden.

Wird ein klassischer Wasser-Dampf-Kreislauf betrachtet, können in diesem im Vergleich mit konventionell betriebenen Zementanlagen wesentlich höhere Heißdampfdrücke erzielt werden, weil das Gastemperaturniveau in der letzten Überhitzerstufe mit bis zu 900°C, oder in einzelnen Varianten sogar darüber liegt. Im Vergleich zu den üblicherweise nach Vorwärmer vorliegenden etwa 350°C - 400°C wesentlich höher liegt. Damit kann die Dampfturbine auch einen höheren Wirkungsgrad erzielen. Zusätzlich ergeben sich geringere Wärmeverluste bei der Verstromung, weil die für die Wärmeauskopplung genutzten Wärmetauscher nah beieinander angeordnet sein können.

Um das Rohmehl in der Rohmühle so vorzutrocknen, dass im Vorwärmer nur noch eine vergleichsweise geringe Wärmeleistung für die Trocknung aufgewendet werden muss, ist üblicherweise das Wärmeangebot und weniger die zur Verfügung stehende Temperatur von Interesse. Hierfür kann das in der Abwärmenutzung nicht verwendete Kühlerabgas oder aber der aus der Abwärmenutzung austretende Gasstrom genutzt werden. Dieser verfügt in der Regel noch über eine hinreichend hohe Temperatur und Wärmeinhalt, um eine Trocknung des Rohmehls zu realisieren.

Idealerweise, mithin bevorzugt, ist der Standort der Rohmühle in der Nähe zum Kühler, um die Gaswege für den Gasverbund kurz zu halten. Bei zwischengeschalteter Abwärmenutzung, beispielsweise für eine Verstromung, ist die Mühle stromabwärts von dem Kühler angeordnet.

Im Oxyfuelprozess treten ähnlich dem konventionellen Prozess zur Herstellung von Zementklinker Schadstoffkreisläufe auf. Gibt es einen internen Schadstoffkreislauf zwischen Ofen und Vorwärmer, wie er sich in ähnlicher Form bei der Klinkerherstellung für Schwefel und Chlor darstellt, ist auch hier ein System notwendig, welches an der Schnittstelle zwischen Ofen und Vorwärmer bzw. Ofen und Calcinator den Kreislauf entlastet. Wird zur Entlastung ein Feststoff abgezogen und anschließend extern weiter behandelt, ergeben sich keine Änderungen zum konventionellen Klinkerherstellungsprozess. Wird ein Gasstrom abgezogen, weil der Chlorkreislauf hoch ist, enthält dieser auch einen hohen Sauerstoffanteil. In konventionellen Drehöfen werden derzeit Bypassgasmengen von 15%, bezogen auf den im Ofeneinlauf vorliegenden Gasstrom, abgezogen. Da der Sauerstoff des sauerstoffhaltigen Gases bei der vorliegenden Erfindung zuvor beispielsweise durch Luftzerlegung, d.h. einen energetisch aufwändigen Prozess erzeugt wurde, ist es sinnvoll, diesen Strom wieder dem Calcinator als Verbrennungsgas zuzuführen.

Deshalb wird in Ausführungsformen der vorliegenden Erfindung für die Bypassanlage die folgende Verschaltung ausgeführt. Es wird der Bypassstrom aus dem Ofeneinlauf abgezogen, mit einem kalten Rückgas vermischt, anschließend durch einen Gas-Gas-Wärmetauscher und einen Verdampfungskühlturm weiter auf ca. 140°C abgekühlt und schließlich entstaubt, wobei die Schadstoffe - überwiegend Alkalien, Schwefel und Chlor - am Filterstaub kondensieren und mit diesem abgeschieden werden. Der verbleibende Gasstrom wird geteilt und einem weiteren Kühler zugeführt, wobei dieser Kühler vorzugsweise indirekt ist und ggf. auch unterhalb den Taupunkt kühlt, so dass in dem Gas enthaltene Feuchte auskondensiert. Dieser Teil wird verwendet, um das heiße Bypassgas abzukühlen. Der andere Teil wird, bevor er dem Calcinator zurückgeführt werden kann, zweckmäßigerweise zumindest teilweise von Feuchte befreit und anschließend im Gas-Gas-Wärmetauscher mit dem in der Bypassglocke gekühltem Abgas erwärmt. Das im Verdampfungskühlturm verwendete Wasser wird nach der Entnahme aus dem Wasserspeicher mittels eines indirekten Wärmetauschers vorgewärmt, um das aus dem Einspritzkühler austretende Wasser abzukühlen. Das aus dem Einspritzkühler austretende Wasser wird weiter in einem Luftkühler abgekühlt und anschließend teilweise dem Wasserreservoir zugeführt oder dem Einspritzkühler wieder zurückgeführt.

Eine Ausgestaltung der vorliegenden Erfindung betrifft ein Verfahren zur Herstellung von hydraulischem Bindemittel, bevorzugt Zementklinker, aus mindestens einem Ausgangsstoff, bestehend aus mindestens den Schritten Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass die den Verbrennungsprozessen zugeführten Gasströme in Summe zu mehr als 50Vol.-%, vorzugsweise zu mehr als 85 Vol.-%, aus Sauerstoff bestehen.

Eine Ausgestaltung der vorliegenden Erfindung betrifft ein Verfahren zur Herstellung von Zementklinker und/oder hydraulischem Klinker, dabei kann es sich beispielsweise um Portlandklinker handeln, bestehend aus einem Vorwärmer, einem (Flugstrom-)calcinator, einem Drehofen und einem Kühler, dadurch gekennzeichnet, dass das aus dem Kühler der Ofenanlage (Drehofen und Calcinator) zugeführte Gas zu mehr als 50 Vol.- %, vorzugsweise mehr als 85 Vol.-%, aus Sauerstoff besteht.

Eine Ausgestaltung der vorliegenden Erfindung betrifft ein Verfahren zur Herstellung eines hydraulischen Bindemittels aus mindestens einem Ausgangsstoff, bestehend aus mindestens den Schritten Vorwärmen des Ausgangsmaterials auf Calcinierungstemperatur, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass die den Verbrennungsprozessen zugeführten Gasströme mehr als 50 Vol.-% Sauerstoff aufweisen und zu weniger als 50 Vol.-% aus zurückgeführtem Abgas aus einem Verbrennungsprozess bestehen, welches durch einen Stickstoffgehalt von weniger als 8 Vol.-% in feuchtem Bezugszustand gekennzeichnet ist.

Eine Ausgestaltung der vorliegenden Erfindung betrifft ein Verfahren zur Herstellung von hydraulischem Zementklinker aus mindestens einem Ausgangsstoff, bestehend aus mindestens den Schritten Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass das Vorwärmen in einem Zyklonvorwärmer geschieht, in dem das Verhältnis von zugeführtem Feststoff und Abgas größer als 1 bis 2 kg Feststoff je 1 kg Gas ist, bevorzugt 1,3 bis 1,9 kg Feststoff je kg Gas.

Eine Ausgestaltung der vorliegenden Erfindung betrifft eine Anlage zur Herstellung von hydraulischem Zementklinker, bestehend aus mindestens einem Zyklonvorwärmer, einem Flugstromcalcinator, einem Drehofen und einem Klinkerkühler, dadurch gekennzeichnet, dass der Flugstromcalcinator über einen nicht-senkrechten Abschnitt verfügt, in dem grobe Brennstoffe mit mehr als 100 mm Kantenlänge (das heißt nicht flugfähige Größe) aufgegeben und von den heißen Gasen im Calcinator überstrichen werden.

Eine Ausgestaltung der vorliegenden Erfindung betrifft ein Verfahren zur Herstellung von hydraulischem Zementklinker aus mindestens einem Ausgangsstoff, bestehend aus mindestens den Schritten Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass dem Ofenkopf / der Verbrennung, also dem Hauptbrenner, ein Teilgasstrom aus in Materialflussrichtung stromauf gelegenen Anlagenteilen (z.B. aus dem Ofeneinlauf oder nach Calcinator) zurückgeführt wird.

Eine Ausgestaltung der vorliegenden Erfindung betrifft ein Verfahren zur Herstellung von hydraulischem Zementklinker aus mindestens einem Ausgangsstoff, bestehend aus mindestens den Schritten Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass einer ersten Sektion des Kühlers ein Gas mit einem Gehalt von 85 Vol.-% Sauerstoff zugeführt wird.

Eine Ausgestaltung der vorliegenden Erfindung betrifft ein Verfahren zur Herstellung von hydraulischem Zementklinker aus mindestens einem Ausgangsstoff, bestehend aus mindestens den Schritten Trocknen und Mahlen des Rohmaterials, Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass heiße Luft aus dem Klinkerkühler wenigstens teilweise der Vorwärmung und anschließend der Trocknung und Mahlung zugeführt wird wobei eine Vermischung mit dem Abgas aus dem Calcinier- und Brennprozess vermieden wird.

Eine Ausgestaltung der vorliegenden Erfindung betrifft ein Verfahren zur Herstellung von hydraulischem Zementklinker aus mindestens einem Ausgangsstoff, bestehend aus mindestens den Schritten Trocknen und Mahlen des Rohmaterials, Vorwärmen des Ausgangsmaterials, Calcinieren des vorgewärmten Ausgangsstoffes, Brennen des calcinierten Ausgangsstoffes mit dem Ziel, hydraulisch aktive Mineralphasen zu erzeugen, Kühlung des hydraulischen Bindemittels, dadurch gekennzeichnet, dass das dem Ofeneinlaufbereich entnommene sauerstoffreiche Gas nach Abreicherung an Schwefel, Chlor und ähnlichen Komponenten dem Ofensystem zurückgeführt wird. Durch diese Ausführungsform wird einerseits der meistens teuer hergestellte Sauerstoff aufgefangen und bleibt weiter verwendbar und zum anderen wird die Abscheidung der Abfallprodukte Chlor und Schwefel auf Staub erreicht.

In einer Ausgestaltung der vorliegenden Erfindung ist das sauerstoffhaltige Gas N₂-abgereicherte Luft, insbesondere sehr stark N₂-abgereicherte Luft.

In einer Ausgestaltung der vorliegenden Erfindung ist das sauerstoffhaltige Gas stark mit O₂ angereicherte Luft.

In einer Ausgestaltung der vorliegenden Erfindung ist das sauerstoffhaltige Gas reiner (technischer) Sauerstoff.

In einer Ausgestaltung der vorliegenden Erfindung ist das sauerstoffhaltige Gas keine O₂/CO₂-Mischung.

In einer Ausgestaltung der vorliegenden Erfindung ist der zugeführte Gasstrom kein rezirkuliertes Gas. In einer Ausgestaltung der vorliegenden Erfindung enthält der zugeführte Gasstrom kein rezirkuliertes Gas.

In einer Ausgestaltung der vorliegenden Erfindung ist das sauerstoffhaltige Gas keine Luft bzw. keine behandelte oder aufgearbeitete Luft. Dies ist eine bevorzugtere Ausgestaltung.

Zu berücksichtigen ist, dass durch den Betrieb der Anlage im Unterdruck möglicherweise Luft in geringer Menge von außen eingesaugt wird. Geringe Menge bedeutet in diesem Falle weniger als 10 Vol.-%, insbesondere 1 bis 5 Vol.-%. Diese eventuell von außen angesaugte Luft wird bei der Definition des sauerstoffhaltigen Gases nicht berücksichtigt.

In einer Ausgestaltung der vorliegenden Erfindung entweichen nur geringe Anteile, bevorzugt keine Anteile des sauerstoffhaltigen Gases als Abluft aus dem Kühler.

Im Rahmen der vorliegenden Erfindung beträgt in einigen Ausführungsformen die dem Drehofen (sekundäres Aggregat zur Bindemittelsinterung) zugeführte Brennstoffenergie weniger als 33% (1/3) der Brennstoffenergie, die für den Prozess notwendig ist.

Im Rahmen der vorliegenden Erfindung beträgt in einigen Ausführungsformen die dem Drehofen zugeführte Wärmemenge weniger als 30% der insgesamt dem Prozess zugeführten Wärmemenge, wobei die Gesamtwärmeenergie der Summe der dem Drehofen, dem Calcinator, dem Abgasweg und den Drehofengasen zugeführten Wärmeenergie entspricht.

Im Rahmen der vorliegenden Erfindung liegt in einigen Ausführungsformen die gesamte durch Verbrennung und Calcination erzeugte Abgasmenge für das Bindemittel (Zementklinker) bei weniger als <1 Nm³/kg Klinker. Ein Nm³ Gas entspricht dabei einem m³ Gas bei einem Druck von 101,325 kPa bei einer Temperatur von 273,15 K.

Im Rahmen der vorliegenden Erfindung liegt in einigen Ausführungsformen die CO₂-Konzentration im Abgas oberhalb von 85 % oder mehr.

Im Rahmen der vorliegenden Erfindung wird in einigen Ausführungsformen die Abgasrezirkulation auf weniger als 15% begrenzt.

Im Rahmen der vorliegenden Erfindung ist es möglich nach dem Vorwärmer CO₂ mit einem stark erhöhten Reinheitsgrad zu erhalten, so dass die weitere Aufarbeitung im Vergleich zum bisherigen Stand der Technik erleichtert bzw. günstiger Möglich ist.

Im Rahmen der vorliegenden Erfindung ist es möglich, die Gas- und Brennstoffmengen so aufeinander abzustimmen, dass es entgegen den Erwartungen des Standes der Technik zu deutlich weniger bzw. sogar gar nicht zu Problemen durch höhere Verbrennungstemperaturen und verringerte Gasvolumenströme kommt.

Die vorliegende Erfindung wird im Folgenden mit Bezugnahme auf die Zeichnungen näher erläutert. Die Zeichnungen sind dabei nicht limitierend auszulegen und nicht maßstabsgetreu. Weiterhin enthalten die Zeichnungen nicht alle Merkmale, die übliche Anlagen aufweisen, sondern sind auf die für die vorliegende Erfindung und ihr Verständnis wesentlichen Merkmale reduziert.

Figurenbeschreibung:

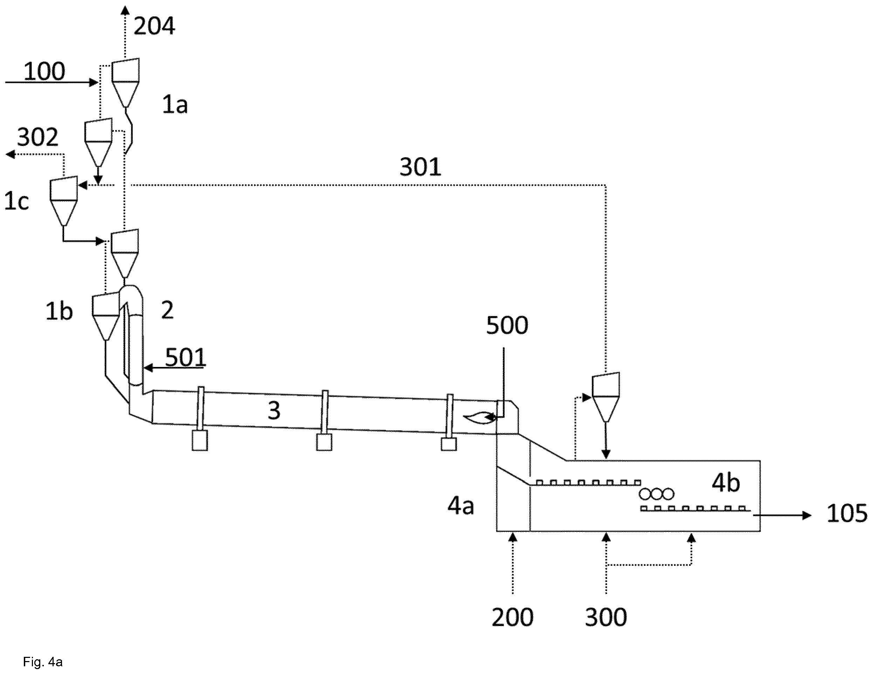

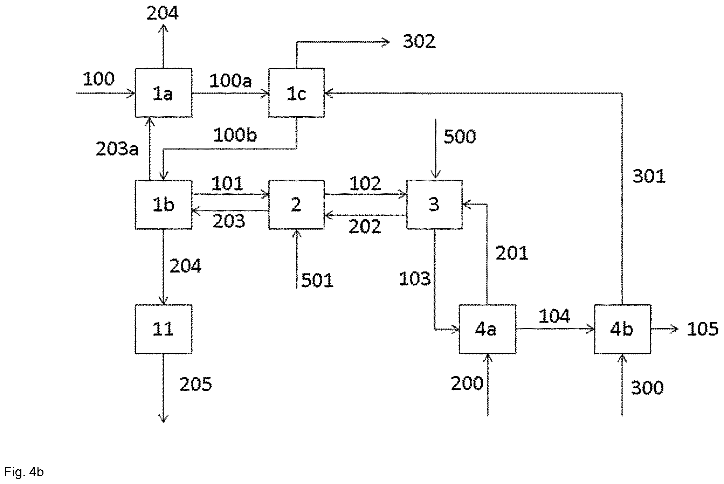

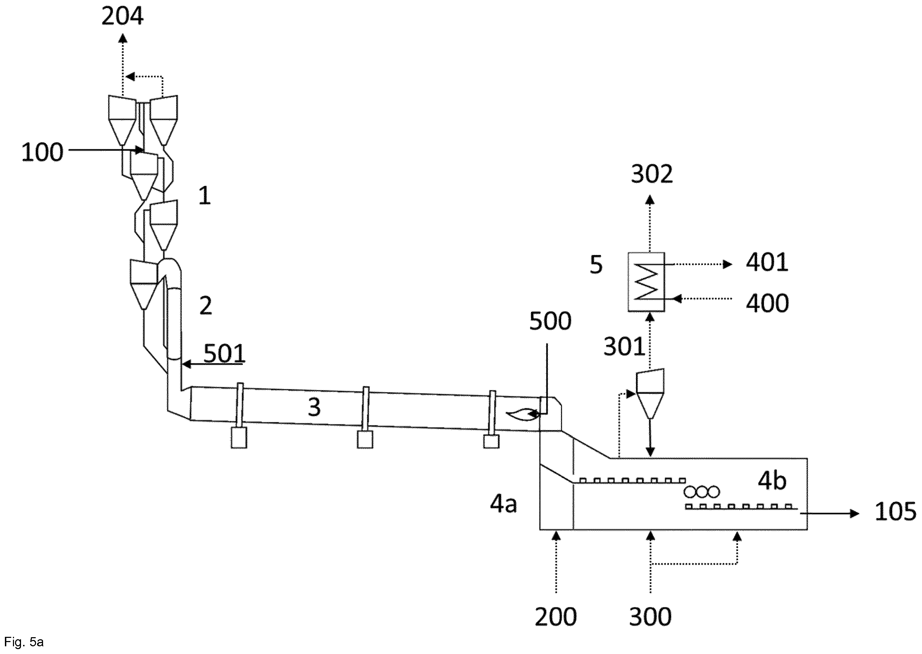

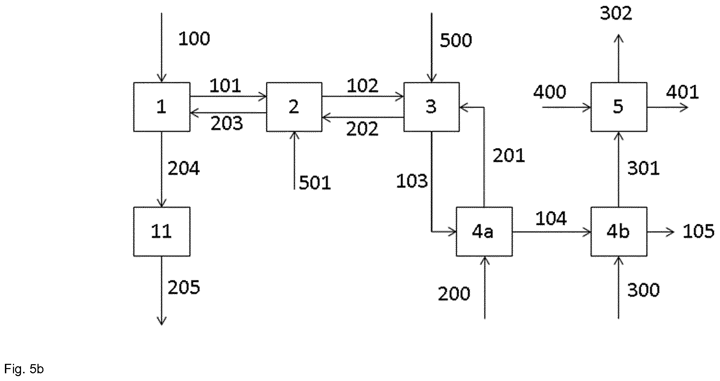

In den Figuren 4 und 5 sind Feststoffübergänge als durchgezogene Pfeile dargestellt und Übergänge von gasförmigen Stoffen als gepunktete Pfeile.

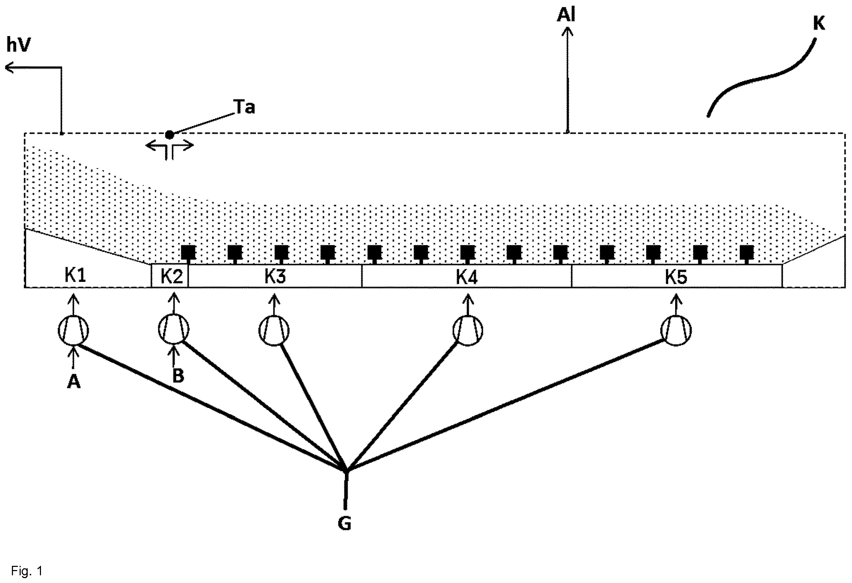

Figur 1 zeigt illustrativ einen Kühler (Klinkerkühler) K, der in fünf verschiedene Kühlzonen K1 bis K5 aufgeteilt ist. Dabei wird über die verschiedenen Gebläse G entsprechend Gas zugeführt. Über die den Zonen K3 bis K5 zugeordneten Gebläse G wird Kühlluft für den Klinker zugeführt, jedoch keine Verbrennungsluft zum Ofen. Über das der Zone K1 zugeordnete Gebläse wird das sauerstoffhaltige Gas A zugeführt, das als Verbrennungsluft in den Ofen geleitet wird. Über das der Zone K2 zugeordnete Gebläse wird Sperrgas B zugeführt. Dieses Sperrgas kann beispielsweise zu 85 Volumenprozent oder mehr aus Kohlendioxid bestehen, wobei der Rest Inertgas ist oder beispielsweise zu 85 Volumenprozent oder mehr aus Sauerstoff bestehen, wobei der Rest in Inertgas ist. Mit Inertgas sind dabei bevorzugt Komponenten wie Wasserdampf, Argon, etc. gemeint. In beiden Fällen dient das Gas B als Sperrgas für die Abdichtung des Sauerstoffbereichs von dem Luftbereich des Kühlers. Ferner ist in Figur 1 eine CO₂-Scheide Ta dargestellt, die durch die Aufgabe des Sperrgases funktioniert.

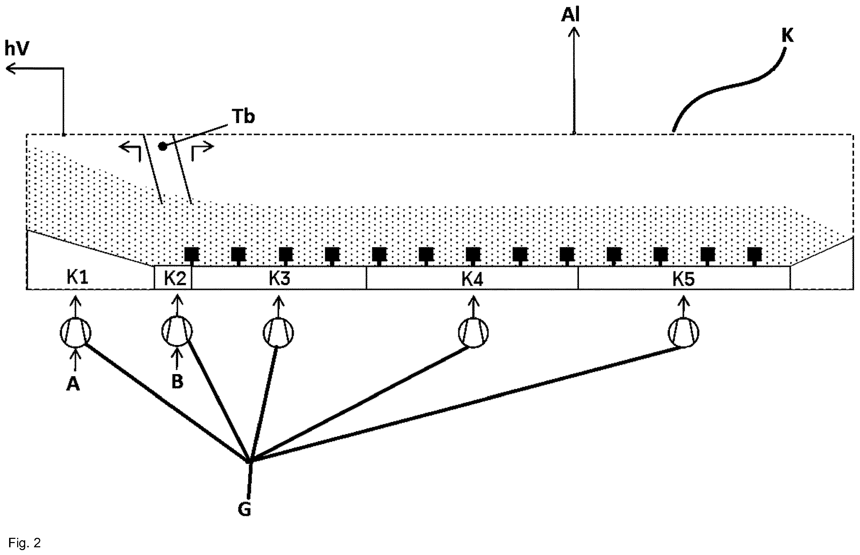

Figur 2 zeigt illustrativ einen Kühler (Klinkerkühler) K, im Wesentlichen wie in Figur 1 dargestellt. Im Unterschied zu Figur 1 ist lediglich die CO₂-Scheide Tb als mechanische Scheide ausgestaltet, bei der die Trennung von sauerstoffhaltigem Gas mittels Aufgabe von Sperrgas und mechanischen Mitteln, wie beispielsweise auf der Schüttung beweglich aufliegenden, pendelartig ausgeführten Trennwänden, erfolgt. Obwohl dies nicht in Figur 2 gezeigt ist, kann gegebenenfalls auf die Zone K2 verzichtet werden, wenn die mechanische CO₂-Scheide ausreichend effektiv ist.

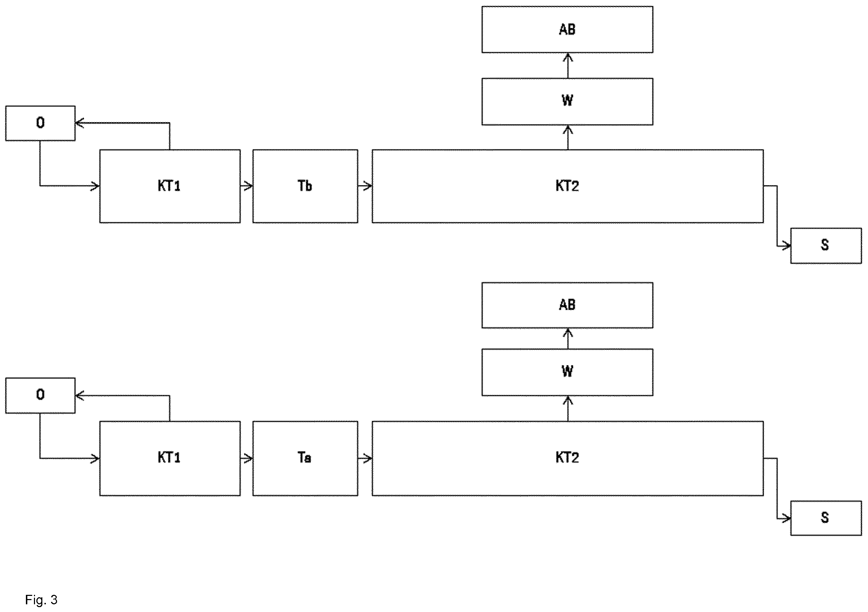

Figur 3 zeigt zwei Fließschemata, die zwei mögliche Varianten der vorliegenden Erfindung illustrieren, bei denen aus dem Ofen heißer Klinker in Kühler Teil 1 eintritt und gleichzeitig aus dem Kühler Teil 1 sauerstoffhaltiges Gas in den Ofen geleitet wird (Rekuperation für Verbrennungsgas zum Ofen). Anschließend an den Kühler Teil 1 ist eine Gastrenneinrichtung angeordnet, an die sich wiederum Kühler Teil 2 anschließt. Anschließend an den Kühler Teil 2 verlässt der Klinker dann die Anlage und wird zum Silo verbracht. Im oberen Teil der Figur ist eine mechanische Gastrenneinrichtung 2b zwischen Kühler Teil 1 (entsprechend Kühlzone K1) und Kühler Teil 2 (entsprechend Kühlzonen K3 bis K5) dargestellt, wohingegen im unteren Teil eine auf Sperrgas basierende Gastrenneinrichtung 2a dargestellt ist. Im Zusammenhang mit Kühler Teil 2 erfolgt in beiden Varianten eine Wärmerückgewinnung für andere Zwecke als für den Einsatz zur Verbrennung, wobei Wärmeträger Verbrennungsluft, CO₂ etc. sind. An den Kühler Teil 2 schließt sich in beiden Fällen zunächst ein Wärmeübertragersystem an, dass auf direkter Wärmeübertragung oder auf indirekter Wärmeübertragung basieren kann. Anschließend daran ist für beide Varianten noch eine Abgasbehandlung dargestellt, die Entstaubung und oder Kamin umfassen kann.

Figur 4 zeigt eine Anlage zur Klinkerherstellung, bei der die Einbindung der Kühlerabluft in die Vorwärmung dargestellt ist. Der Kühler ist dabei im Vergleich zu den Figuren 1 und 2 vereinfacht dargestellt, dahingehend, dass lediglich ein Gebläse links für die Zuführung von sauerstoffhaltigen Gas gemäß vorliegende Erfindung dargestellt ist, und die übrigen vier Gebläse für die Luftzufuhr dargestellt sind. Gemäß der in dieser Figur dargestellten Ausführungsform wird die Kühlerabluft über einen Zyklonabscheider zur Abtrennung von Feststoffpartikeln in den Vorwärmer geleitet.

Figur 5 beschreibt eine ähnliche Ausführungsform wie Figur 4, die Abwärme wird jedoch anders genutzt als in Figur 4. Die Kühlerabluft wird auch hier durch einen Zyklonabscheider jedoch dann nicht in die Vorwärmerstufe geführt, sondern durch einen Wärmetauscher und dann zur Trocknung des Rohmehls in die Rohmahlanlage geführt.

### Bezugszeichenliste:

- K: Kühler (Klinkerkühler)
- Ta: Gastrenneinrichtung mit Sperrgas (CO₂-Scheide (Sperrgas))
- Tb: mechanische Gastrenneinrichtung bzw. mechanische Gastrenneinrichtung in Kombination mit Sperrgas (CO₂-Scheide (mechanisch bzw. Kombination mechanisch/Sperrgas))
- G: Gebläse
- K1: Kühlzone 1 (erste Kühlzone)
- K2: Kühlzone 2 (zweite Kühlzone)
- K3: Kühlzone 3 (dritte Kühlzone)
- K4: Kühlzone 3 (vierte Kühlzone)
- K5: Kühlzone 5 (fünfte Kühlzone)
- A: sauerstoffhaltiges Gas
- B: Sperrgas
- hV: heiße Verbrennungsluft
- Al: Abluft

- O: Ofen
- KT1: Kühler, Teil 1
- KT2: Kühler, Teil 2
- AB: Abgasbehandlung
- W: Wärmeübertragersystem
- S: Silo

- 1: Vorwärmer
- 1a: Vorwärmer (obere Sektion)
- 1b: Vorwärmer (untere Sektion)
- 1c: Vorwärmzyklon mit Kühlerabluft beaufschlagt
- 2: Calcinator
- 3: Drehofen
- 4a: Kühler mit Sauerstoff als Kühlmedium
- 4b: Kühler mit Luft als Kühlmedium
- 5: Luft-Luft-Wärmetauscher

- 100: Rohmaterial
- 100a,b: Heißmehl
- 101: Heißmehl zum Calcinator
- 102: Heißmehl zum Drehofen
- 103: Heißklinker
- 104: Heißklinker (ca. 1000 °C)
- 105: Kaltklinker
- 200: Sauerstoff (> 85 %)
- 201: Sekundärgas
- 202: Ofenabgas
- 203: Calcinatorabgas
- 203a: Abgas untere Vorwärmersektion
- 204: Vorwärmerabgas
- 300: Kühlerzuluft
- 301: Kühlerabluft
- 302: Kühlerabluft zur Rohmühle
- 400: Luft zum Wärmetauscher
- 401: Erwärmte Luft zur Rohmühle
- 500: Brennstoff Hauptfeuerung
- 501: Brennstoff Calcinator

## Patentansprüche

1. Verfahren zur Herstellung zur Herstellung von Zementklinker umfassend die Schritte
a) Vorwärmen des Ausgangsmaterials auf Calcinierungstemperatur,
b) Calcinieren des vorgewärmten Ausgangsstoffes,
c) Brennen des calcinierten Ausgangsstoffes in einem Drehofen,
d) Kühlung des Zementklinkers,
e) Zuführen eines sauerstoffhaltigen Gases, das einen Anteil von 15 Vol.-% oder weniger Stickstoff und einen Anteil von 50 Vol.-% oder mehr Sauerstoff aufweist, aus einer ersten, direkt an den Ofenkopf angrenzenden Sektion des Kühlers in
i) den Drehofen,
**dadurch gekennzeichnet, dass** die den Verbrennungsprozessen zugeführten Gasströme in Summe zu mehr als 50 Vol.-% aus Sauerstoff bestehen,
**dadurch gekennzeichnet, dass** die Zudosierung des sauerstoffhaltigen Gases so eingestellt wird, dass am Hauptbrenner ein Sauerstoffüberschuß vorliegt und Restmengen des Sauerstoffs für eine dortige Verbrennung in den Calcinator gelangen.

2. Verfahren nach Anspruch 1, **dadurch gekennzeichnet, dass** Schritt e) zusätzlich
ii) das Zuführen des sauerstoffhaltigen Gases in den Calcinator umfasst.

3. Verfahren nach Anspruch 1 oder 2, **dadurch gekennzeichnet, dass** in Schritt a) das Verhältnis von zugeführtem Feststoff zu Abgas auf größer als 1,0 kg, vorzugsweise größer als 1,3 kg Feststoff je 1 kg Gas, bevorzugt 1 bis 2 kg/kg Feststoff zu Gas, besonders bevorzugt 1,3 bis 1,9 kg/kg Feststoff zu Gas, eingestellt wird, wobei zur Vorwärmung bevorzugt mindestens ein Zyklonvorwärmer eingesetzt wird.

4. Verfahren nach einem der Ansprüche 1 bis 3, **dadurch gekennzeichnet, dass** in Schritt b) das Verhältnis von zugeführtem Feststoff zu Abgas auf größer als 1,0 kg, vorzugsweise größer als 1,3 kg Feststoff je 1 kg Gas, bevorzugt 1 bis 2 kg/kg Feststoff zu Gas, besonders bevorzugt 1,3 bis 1,9 kg/kg Feststoff zu Gas, eingestellt wird, wobei der Calcinator bevorzugt ein Flugstromcalcinator ist.

5. Verfahren nach einem der Ansprüche 1 bis 4, **dadurch gekennzeichnet, dass** in den Calcinator, der bevorzugt ein über einen nicht-senkrechten Abschnitt verfügender Flugstromcalcinator ist, grobe Brennstoffe mit einer Kantenlänge von 70 mm oder mehr, bevorzugt 100 mm oder mehr, aufgegeben werden, so dass sie von den heißen Gasen im Calcinator überstrichen werden.

6. Verfahren nach einem der Ansprüche 1 bis 5, **dadurch gekennzeichnet, dass** dem Ofenkopf zur Verbrennung ein Teilgasstrom aus in Materialflussrichtung stromaufwärts gelegenen Anlagenteilen, bevorzugt aus dem Ofeneinlauf oder nach dem Calcinator, zurückgeführt wird.

7. Verfahren nach einem der Ansprüche 1 bis 6, **dadurch gekennzeichnet, dass** heiße Abluft aus dem Klinkerkühler
a) wenigstens teilweise der Vorwärmung,
oder
b) wenigstens teilweise der Trocknung und Mahlung,
oder
c) wenigstens teilweise der Vorwärmung und anschließend der Trocknung und Mahlung zugeführt wird,
wobei eine Vermischung mit dem Abgas aus dem Calcinier- und Brennprozess vermieden wird.

8. Verfahren nach einem der Ansprüche 1 bis 7, **dadurch gekennzeichnet, dass** das dem Ofeneinlaufbereich entnommene sauerstoffreiche Gas nach Abreicherung an zumindest Schwefel und Chlor dem Ofensystem zurückgeführt wird.

9. Verfahren nach einem der Ansprüche 1 bis 8, **dadurch gekennzeichnet, dass** das Gas
i) 75 Vol.-% oder mehr Sauerstoff enthält, bevorzugt 85 Vol.-% oder mehr, 90 Vol.-% oder mehr, 95 Vol.-% oder mehr, 98 Vol.-% oder mehr oder 99% Vol.-% oder mehr, oder
ii) 10 Vol.-% oder weniger Stickstoff enthält, bevorzugt 8 Vol.-% oder weniger, 6 Vol.-% oder weniger, 4 Vol.-% oder weniger, oder Stickstoff unterhalb der Nachweisgrenze enthält,
oder
iii) 75 Vol.-% oder mehr Sauerstoff enthält, bevorzugt 85 Vol.-% oder mehr, 90 Vol.-% oder mehr, 95 Vol.-% oder mehr, 98 Vol.-% oder mehr oder 99% Vol.-% oder mehr, und 10 Vol.-% oder weniger Stickstoff enthält, bevorzugt 8 Vol.-% oder weniger, 6Vol.-% oder weniger, 4Vol.-% oder weniger, oder Stickstoff unterhalb der Nachweisgrenze,
enthält.

10. Verfahren nach einem der Ansprüche 1 bis 9, **dadurch gekennzeichnet, dass** die zudosierten Mengen von Gas und Brennstoff in Abhängigkeit von Verbrennungstemperatur und Gasvolumenströmen geregelt werden.

11. Verfahren nach einem der Ansprüche 1 bis 10, **dadurch gekennzeichnet, dass** die Zudosierung des sauerstoffhaltigen Gases so eingestellt wird, dass der zugeführte Sauerstoff für die vollständige Verbrennung am Hauptbrenner und Calcinator ausreichend ist

12. Verfahren nach einem der Ansprüche 1 bis 11, **dadurch gekennzeichnet, dass** die Zudosierung des sauerstoffhaltigen Gases ausschließlich auf der Seite eines in dem Kühler angeordneten Gastrennvorrichtung erfolgt, die dem Ofenkopf direkt angrenzt,
wobei die Gastrennvorrichtung
i) eine mechanische Gastrennvorrichtung,
ii) ein auf einer Sperrgas-Aufgabe basierendes System, oder
iii) ein kombiniertes System
ist.

## Claims

1. Process for producing cement clinker, comprising the steps
a) preheating of the starting material to calcination temperature,
b) calcination of the preheated starting material,
c) firing of the calcined starting material in a rotary furnace,
d) cooling of the cement clinker,
e) feeding of an oxygen-containing gas having a proportion of 15% by volume or less of nitrogen and a proportion of 50% by volume or more of oxygen from a first section of the cooler directly adjoining the top of the furnace into
i) the rotary furnace,
**characterized in that** the gas streams fed to the combustion processes in total consist to an extent of more than 50% by volume of oxygen,
**characterized in that** the introduction of the oxygen-containing gas is set so that there is an excess of oxygen at the main burner and residual amounts of the oxygen go into the calciner for combustion there.

2. Process according to Claim 1, **characterized in that** step e) additionally comprises
ii) feeding of the oxygen-containing gas into the calciner.

3. Process according to Claim 1 or 2, **characterized in that** the ratio of solid fed in to exhaust gas in step a) is set to greater than 1.0 kg, preferably greater than 1.3 kg, of solid per 1 kg of gas, preferably from 1 to 2 kg/kg of solid to gas, particularly preferably from 1.3 to 1.9 kg/kg of solid to gas, where at least one cyclone preheater is preferably used for preheating.

4. Process according to any of Claims 1 to 3, **characterized in that** the ratio of solid fed in to exhaust gas in step b) is set to greater than 1.0 kg, preferably greater than 1.3 kg, of solid per 1 kg of gas, preferably from 1 to 2 kg/kg of solid to gas, particularly preferably from 1.3 to 1.9 kg/kg of solid to gas, where the calciner is preferably an entrained flow calciner.

5. Process according to any of Claims 1 to 4, **characterized in that** coarse fuels having an edge length of 70 mm or more, preferably 100 mm or more, are introduced into the calciner, which is preferably an entrained flow calciner having a nonvertical section, so that the hot gases flow over them in the calciner.

6. Process according to any of Claims 1 to 5, **characterized in that** a gas substream from plant components located upstream in the flow direction of material, preferably from the furnace inlet or downstream of the calciner, is recirculated to the top of the furnace for combustion.

7. Process according to any of Claims 1 to 6, **characterized in that** hot exhaust air from the clinker cooler is fed
a) at least partly to preheating,
or
b) at least partly to drying and milling,
or
c) at least partly to preheating and subsequently to drying and milling,
with mixing with the exhaust gas from the calcination and firing process being avoided.

8. Process according to any of Claims 1 to 7, **characterized in that** the oxygen-rich gas taken off from the furnace inlet region is, after having been depleted in at least sulfur and chlorine, recirculated to the furnace system.

9. Process according to any of Claims 1 to 8, **characterized in that** the gas
i) contains 75% by volume or more of oxygen, preferably 85% by volume or more, 90% by volume or more, 95% by volume or more, 98% by volume or more or 99% by volume or more,
or
ii)contains 10% by volume or less of nitrogen, preferably 8% by volume or less, 6% by volume or less, 4% by volume or less, or has a nitrogen content below the detection limit,
or
iii) contains 75% by volume or more of oxygen, preferably 85% by volume or more, 90% by volume or more, 95% by volume or more, 98% by volume or more or 99% by volume or more, and contains 10% by volume or less of nitrogen, preferably 8% by volume or less, 6% by volume or less, 4% by volume or less, or has a nitrogen content below the detection limit.

10. Process according to any of Claims 1 to 9, **characterized in that** the amounts of gas and fuel introduced are regulated as a function of combustion temperature and gas volume flows.

11. Process according to any of Claims 1 to 10, **characterized in that** the introduction of the oxygen-containing gas is set so that the oxygen fed in is sufficient for complete combustion at the main burner and in the calciner.

12. Process according to any of Claims 1 to 11, **characterized in that** the introduction of the oxygen-containing gas is carried out exclusively on the side of a gas separation device which is arranged in the cooler and directly adjoins the top of the furnace, where the gas separation device is
i) a mechanical gas separation device,
ii)a system based on supply of a barrier gas, or
iii) a combined system.

## Revendications

1. Procédé pour la préparation de clinker de ciment, comprenant les étapes
a) préchauffage du matériau de départ à la température de calcination,
b) calcination de la substance de départ préchauffée,
c) cuisson de la substance de départ calcinée dans un four rotatif,
d) refroidissement du clinker de ciment,
e) introduction d'un gaz oxygéné, qui présente une proportion de 15 % en volume ou moins d'azote et une proportion de 50 % en volume ou plus d'oxygène, à partir d'une première section du refroidisseur, directement adjacente à la tête du four, dans
i) le four rotatif,
**caractérisé en ce que** les flux gazeux introduits dans les procédés de combustion sont constitués, au total, à raison de plus de 50 % en volume d'oxygène, **caractérisé en ce que** le dosage du gaz oxygéné est réglé de manière telle qu'un excès d'oxygène est présent au niveau du brûleur principal et les quantités résiduelles de l'oxygène arrivent dans le calcinateur pour leur combustion en cet endroit.

2. Procédé selon la revendication 1, **caractérisé en ce que** l'étape e) comprend en outre ii) l'introduction du gaz oxygéné dans le calcinateur.

3. Procédé selon la revendication 1 ou 2, **caractérisé en ce que**, dans l'étape a), le rapport de solide alimenté à gaz résiduels est réglé à plus de 1,0 kg, de préférence à plus de 1,3 kg de solide par 1 kg de gaz, de préférence de 1 à 2 kg de solide/kg de gaz, de manière particulièrement préférée de 1,3 à 1,9 kg de solide/kg de gaz, au moins un dispositif de préchauffage à cyclone étant de préférence utilisé pour le préchauffage.

4. Procédé selon l'une quelconque des revendications 1 à 3, **caractérisé en ce que**, dans l'étape b), le rapport de solide alimenté à gaz résiduels est réglé à plus de 1,0 kg, de préférence à plus de 1,3 kg de solide par 1 kg de gaz, de préférence de 1 à 2 kg de solide/kg de gaz, de manière particulièrement préférée de 1,3 à 1,9 kg de solide/kg de gaz, le calcinateur étant de préférence un calcinateur à lit entraîné.

5. Procédé selon l'une quelconque des revendications 1 à 4, **caractérisé en ce que** des combustibles grossiers, présentant une longueur d'arête de 70 mm ou plus, de préférence de 100 mm ou plus, sont fournis au calcinateur, qui est de préférence un calcinateur à flux entraîné disposant d'une section non verticale, de telle sorte que lesdits combustibles sont balayés par les gaz chauds dans le calcinateur.

6. Procédé selon l'une quelconque des revendications 1 à 5, **caractérisé en ce qu'**un flux gazeux partiel provenant de parties d'installation disposées en amont dans le sens d'écoulement du matériau, provenant de préférence de l'entrée du four ou après le calcinateur, est recyclé dans la tête de four pour la combustion.

7. Procédé selon l'une quelconque des revendications 1 à 6, **caractérisé en ce que** de l'air résiduel chaud provenant du refroidisseur de clinker est recyclé
a) au moins partiellement dans le dispositif de préchauffage ou
b) au moins partiellement dans le séchage et le broyage ou
c) au moins partiellement dans le dispositif de préchauffage et ensuite dans le séchage et le broyage,
un mélange avec les gaz résiduels provenant du procédé de calcination et de combustion étant évité.

8. Procédé selon l'une quelconque des revendications 1 à 7, **caractérisé en ce que** le gaz riche en oxygène prélevé dans la zone d'entrée du four est recyclé dans le système de four après appauvrissement au moins en soufre et en chlore.

9. Procédé selon l'une quelconque des revendications 1 à 8, **caractérisé en ce que** le gaz contient
i) 75 % en volume ou plus d'oxygène, de préférence 85 % en volume ou plus, 90 % en volume ou plus, 95 % en volume ou plus, 98 % en volume ou plus ou 99 % en volume ou plus ou
ii) 10 % en volume ou moins d'azote, de préférence 8 % en volume ou moins, 6 % en volume ou moins, 4 % en volume ou moins ou de l'azote sous la limite de détection ou
iii) 75 % en volume ou plus d'oxygène, de préférence 85 % en volume ou plus, 90 % en volume ou plus, 95 % en volume ou plus, 98 % en volume ou plus ou 99 % en volume ou plus et 10 % en volume ou moins d'azote, de préférence 8 % en volume ou moins, 6 % en volume ou moins, 4 % en volume ou moins ou de l'azote sous la limite de détection.

10. Procédé selon l'une quelconque des revendications 1 à 9, **caractérisé en ce que** les quantités dosées de gaz et de combustible sont réglées en fonction de la température de combustion et des flux volumiques des gaz.

11. Procédé selon l'une quelconque des revendications 1 à 10, **caractérisé en ce que** le dosage du gaz oxygéné est réglé de manière telle que l'oxygène introduit est suffisant pour la combustion totale au niveau du brûleur principal et du calcinateur.

12. Procédé selon l'une quelconque des revendications 1 à 11, **caractérisé en ce que** le dosage du gaz oxygéné a lieu exclusivement du côté d'un dispositif de séparation de gaz agencé dans le refroidisseur, lequel dispositif est directement adjacent à la tête de four, le dispositif de séparation de gaz étant
i) un dispositif mécanique de séparation de gaz,
ii) un système basé sur une fourniture d'un gaz barrière
ou
iii) un système combiné.
